# EUROPÄISCHE PATENTSCHRIFT

(11) **EP 1 926 758 B1**
(45) Veröffentlichungstag und Bekanntmachung des Hinweises auf die Patenterteilung: **28.02.2018**
(21) Anmeldenummer: 06793090.9
(22) Anmeldetag: 31.08.2006
(51) Int. Cl.: B01J 19/26, C08F 4/40, C08F 2/01, C08F 2/00, B01J 19/18, B01J 19/24, A61L 15/60, A61L 15/24, C08F 220/06

(54) **POLYMERISATIONSVERFAHREN**
POLYMERIZATION METHOD
PROCÉDÉ DE POLYMÉRISATION

(30) Priorität: 07.09.2005 DE 102005042609
(43) Veröffentlichungstag der Anmeldung: 04.06.2008
(73) Patentinhaber: BASF SE, 67056 Ludwigshafen am Rhein (DE)
(72) Erfinder: WEISMANTEL, Matthias, 63637 Jossgrund (DE); DE MARCO, Michael, 69469 Weinheim (DE); DAISS, Andreas, 67146 Deidesheim (DE); VAN ESBROECK, Dominicus, NL-4725 SN Wouse Plantage (NL); POSSEMIERS, Karl, J., B-2970 Schilde (BE); DE KAEY, Ronny, B-2531 Vremde (BE); VAN MIERT, Leo, B-2950 Kapellen (BE)
(74) Vertreter: BASF IP Association
(86) Internationale Anmeldenummer: PCT/EP2006/065848
(87) Internationale Veröffentlichungsnummer: WO 2007/028750

(56) Entgegenhaltungen:
- EP-A1- 0 324 385
- WO-A1-2004/022609
- WO-A2-02/32964
- DE-A1- 19 529 348
- US-A1- 2004 018 365
- US-A1- 2004 204 554
- CHEMICAL ABSTRACTS + INDEXES, AMERICAN CHEMICAL SOCIETY. COLUMBUS, US, 15. November 1993 (1993-11-15), XP000407497 ISSN: 0009-2258

## Beschreibung

Die vorliegende Erfindung betrifft ein Verfahren zur kontinuierlichen Herstellung wasserabsorbierender Polymerpartikel, wobei eine Monomerlösung mit einem Redox-Initiator, bestehend aus mindestens einem Oxidationsmittel und mindestens einem Reduktionsmittel, vermischt und polymerisiert wird, wobei die Monomerlösung vor dem Polymerisationsreaktor mit mindestens einem Oxidationsmittel vermischt wird und mindestens ein Reduktionsmittel in den Polymerisationsreaktor dosiert wird.

Wasserabsorbierende Polymere sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate, wobei wasserabsorbierende Polymere auf Basis teilneutralisierter Acrylsäure bevorzugt werden. Solche Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Herstellung der wasserabsorbierenden Polymere wird beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben. Das bevorzugte Herstellungsverfahren ist die Lösungs- oder Gelpolymerisation. Bei dieser Technologie wird zunächst eine Monomermischung hergestellt, die diskontinuierlich neutralisiert und dann in einen Polymerisationsreaktor überführt wird, oder bereits im Polymerisationsreaktor vorgelegt wird. Im sich anschließenden diskontinuierlichen oder kontinuierlichen Verfahren erfolgt die Reaktion zum Polymergel, das im Falle einer gerührten Polymerisation bereits zerkleinert wird. Das Polymergel wird anschließend getrocknet, gemahlen und gesiebt und dann zur weiteren Oberflächenbehandlung transferiert.

Ein kontinuierliches Polymerisationsverfahren liegt beispielsweise der WO-A-01/38402 zugrunde, wobei die wässrige Monomerlösung zusammen mit dem Initiator und dem Inertgas kontinuierlich einem Mischkneter mit mindestens zwei achsparallel rotierenden Wellen zugeführt wird.

Kontinuierliche Gelpolymerisationen sind weiterhin bekannt aus WO-A-03/004237, WO-A-03/022896 und WO-A-01/016197.

Häufig werden die Polymerisationen durch Redox-Initiatoren gestartet, wie in DE-A-199 55 861, EP-A-1 097 946 und WO-A-03/022896 beschrieben.

Gemäß DE-A-199 55 861 werden beispielsweise Natriumperoxodisulfat, Wasserstoffperoxid und Ascorbinsäure über getrennte Leitungen zusammen mit der Monomerlösung in einen kontinuierlichen Kneter dosiert.

EP-A-1 097 946 offenbart die Verwendung von Natriumpersulfat, Wasserstoffperoxid und Ascorbinsäure als Redox-Initiatoren, wobei die Initiatorkomponenten vor dem Bandreaktor nacheinander der Monomerlösung zugesetzt werden.

WO-A-03/022896 beschreibt die Verwendung von Natriumpersulfat und Ascorbinsäure als Redox-Initiatoren. Die Monomerlösung wird mit Natriumpersulfat vorgemischt und unmittelbar vor dem Kneter (Polymerisationsreaktor) mit Ascorbinsäure versetzt.

Gemäß DE-A-195 29 348 werden beispielsweise Natriumperoxodisulfat oder Wasserstoffperoxid und Ascorbinsäure nacheinander der Monomerlösung zugesetzt.

WO-A-04/022609 beschreibt ein Verfahren zur Nachbehandlung von wässrigen Polymerdispersionen unter Zugabe eines Redoxsystems

HP-A-0 324 385 beschreibt die Verwendung von Redox-Initiatoren, um die "Initial rate" der Polymerisation in diskontinuierlichen Verfahren zu verlangsamen.

Aufgabe der vorliegenden Erfindung war die Bereitstellung eines verbesserten Verfahrens zur Herstellung wasserabsorbierender Polymere, wobei das Initiatorsystem optimal in die Monomerlösung eingemischt und die Gefahr einer vorzeitigen Polymerisation vermindert wird.

Eine weitere Aufgabe der vorliegenden Erfindung war die Bereitstellung eines verbesserten Polymerisationsverfahrens zur Herstellung vernetzter Polymere, wobei der Monomerumsatz möglichst hoch und der Anteil unvernetzter Polymere möglichst niedrig sein sollte.

Gelöst wurde die Aufgabe durch ein Verfahren zur kontinuierlichen Herstellung wasserabsorbierender Polymerpartikel, wobei eine Monomerlösung mit einem Redox-Initiator, bestehend aus mindestens einem Oxidationsmittel und mindestens einem Reduktionsmittel, vermischt und zu einem Polymergel polymerisiert wird, dadurch gekennzeichnet, dass die Monomerlösung vor dem Polymerisationsreaktor mit mindestens einem Oxidationsmittel vermischt wird, mindestens ein Reduktionsmittel in den Polymerisationsreaktor dosiert wird und das Polymergel zerteilt wird.

Als Oxidationsmittel können sämtliche unter den Polymerisationsbedingungen in Radikale zerfallende Verbindungen eingesetzt werden, beispielsweise Peroxide, Hydroperoxide, Wasserstoffperoxid und Persulfate. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butyl-per-2-ethylhexanoat, tert.-Butylperisononanoat, tert.-Butylpermaleat, tert.-Butylperbenzoat, Di-(2-ethylhexyl)peroxydicarbonat, Dicyclohexylperoxydicarbonat, Di-(4-tert.-butylcyclohexyl)peroxydicarbonat, Dimyristilperoxydicarbonat, Diacetylperoxydicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylperneodekanoat.

Vorzugsweise werden mindestens zwei Oxidationsmittel eingesetzt. Bevorzugt werden die mindestens zwei Oxidationsmittel vorgemischt, d.h. als Mischung in die Monomerlösung dosiert.

Geeignete Reduktionsmittel sind beispielsweise Ascorbinsäure, Glukose, Sorbose, Ammonium- oder Alkalimetallhydrogensulfit, -sulfit, -thiosulfat, -hyposulfit, -pyrosulfit,-sulfid oder Natriumhydroxymethylsulfoxylat. Vorzugsweise verwendet man als reduzierende Komponente des Redox-Initiators Ascorbinsäure oder Natriumpyrosulfit.

Zusätzlich können noch weitere Initiatoren eingesetzt werden, beispielsweise AzoInitiatoren.

Die Viskosität der Monomerlösung beträgt bei 15°C vorzugsweise von 5 bis 200 mPas, besonders bevorzugt von 10 bis 100 mPas, ganz besonders bevorzugt von 20 bis 50 mPas, wobei die Viskosität mit einem Brookfield-Viskosimeter (Spindel 2, 100 Upm) gemessen wird.

Die Monomerkonzentration in der Monomerlösung beträgt vorzugsweise von 10 bis 80 Gew.-%, besonders bevorzugt von 20 bis 60 Gew.-%, ganz besonders bevorzugt von 30 bis 50 Gew.-%.

Die Monomerlösung enthält mindestens ein einfach ethylenisch ungesättigtes Monomer, vorzugsweise Acrylsäure und/oder deren Salze. Der Anteil an Acrylsäure und/oder deren Salze an der Gesamtmonomermenge beträgt vorzugsweise mindestens 50 mol-%, besonders bevorzugt mindestens 90 mol-%, ganz besonders bevorzugt mindestens 95 mol-%.

In einer bevorzugten Ausführungsform der vorliegenden Erfindung wird das mindestens eine Oxidationsmittel über ein Venturi-Rohr dosiert.

Ein Venturi-Rohr ist eine in ihrer Länge begrenzte Rohrverengung, in der der Druckverlust weitgehend reversibel in kinetische Energie umgewandelt wird. Dazu wird die Querschnittsfläche F₁ auf der Strecke L₁ (Einlaufstrecke) auf den Querschnitt F₂ vermindert, der Querschnittsfläche F₂ wird auf der Strecke L₂ (Einschnürzone) konstant gehalten und anschließend wird die Querschnittsfläche F₂ auf der Strecke L₃ (Diffusor) wieder auf die Querschnittsfläche F₁ geweitet. Dabei ist die Querschnittsfläche F₁ größer als die Querschnittsfläche F₂ und die Länge L₃ größer als die Länge L₁.

Die Dosierung des Oxidationsmittels erfolgt vorzugsweise im Bereich der Strecke L₁ oder der Strecke L₂.

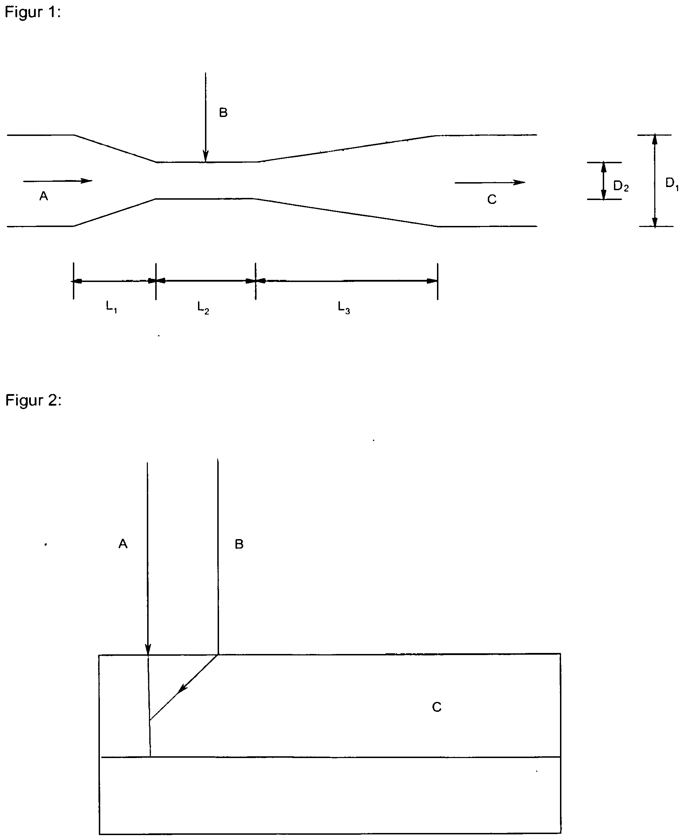

Die Figur 1 zeigt ein typisches Venturi-Rohr, wobei die Bezugszeichen die folgende Bedeutung haben:
A: Monomerlösung vor Oxidationsmitteldosierung
B: Oxidationsmittelzuführung
C: Monomerlösung mit Oxidationsmittel
L₁: Einlaufstrecke
L₂: Einschnürzone
L₃: Diffusor
D₁: Durchmesser der Rohrleitung
D₂: Durchmesser der Einschnürzone

Die optimale Auslegung eines Venturi-Rohrs ist dem Fachmann an sich bekannt. Vorzugsweise wird das Venturi-Rohr so ausgelegt, dass der Druck im Bereich der Strecke L₂ weniger als der Umgebungsdruck beträgt (Saugförderung) und/oder das die Strömung im Bereich der Strecke L₂ turbulent ist, wobei die Reynolds-Zahl mindestens 1000, vorzugsweise mindestens 2000, besonders bevorzugt mindestens 3000, ganz besonders bevorzugt mindestens 4000, und üblicherweise weniger als 10.000.000 betragen sollte.

Die Dosierung des mindestens einen Oxidationsmittels kann über eine oder mehrere Zugabestellen erfolgen.

Beispielsweise kann das Oxidationsmittel über zwei, drei, vier, fünf oder sechs Zugabestellen dosiert werden, wobei die Zugabestellen vorzugsweise so angeordnet sind, dass sie eine gemeinsame Achse aufweisen (für zwei Zugabestellen) oder einen symmetrischen Stern bilden (für mindestens drei Zugabestellen) und die Achse bzw. Stern senkrecht zur Flussrichtung der Monomerlösung befindet (Mehrfachzugabestellen).

Das Aufteilen in mehrere Zugabestellen bewirkt eine gleichmäßigere Durchmischung.

Bei Verwendung mehrerer Oxidationsmittel können diese getrennt oder als Mischung dosiert werden, vorzugsweise als Mischung.

Die Verweilzeit der Mischung zwischen der Zugabestelle des mindestens einen Oxidationsmittels und dem Polymerisationsreaktor beträgt vorzugsweise weniger als 20 Sekunden, bevorzugt weniger als 15 Sekunden, besonders bevorzugt weniger als 10 Sekunden, ganz besonders bevorzugt weniger als 5 Sekunden. Ganz besonders vorteilhaft ist eine Verweilzeit im Bereich von 0,1 bis 1 Sekunden.

Das mindestens eine Reduktionsmittel wird so in den Polymerisationsreaktor dosiert, dass das Reduktionsmittel erst im Polymerisationsreaktor mit der Monomerlösung in Kontakt kommen kann, vorzugsweise mindestens 5 cm, bevorzugt mindestens 10 cm, besonders bevorzugt mindestens 20 cm, ganz besonders bevorzugt mindestens 50 cm, von dem Punkt entfernt, an dem die Monomerlösung in den Polymerisationsreaktor eintritt.

In einer bevorzugten Ausführungsform der vorliegenden Erfindung werden Monomerlösung und Reduktionsmittel so in den Polymerisationsreaktor dosiert, dass sich die Flüssigkeitsströme spätestens in der Höhe vermischen, die dem Füllgrad des Polymerisationsreaktors entspricht. Figur 2 zeigt ein Beispiel dieser bevorzugten Ausführungsform, worin die Bezugszeichen die folgenden Bedeutungen haben:
A: Zuleitung für Monomerlösung mit Oxidationsmittel
B: Zuleitung für Reduktionsmittel
C: Polymerisationsreaktor

Die Polymerisationsneigung läßt sich vermindern, wenn die Verbindung zwischen Oxidationsmitteldosierung und Polymerisationsreaktor zumindest teilweise, vorzugsweise zumindest zu mindestens 50% der Fläche, besonders bevorzugt soweit konstruktiv möglich vollständig, eine Materialoberfläche aufweist, die gegenüber Wasser einen Kontaktwinkel von mindestens 60°, vorzugsweise mindestens 90°, besonders bevorzugt mindestens 100°, hat.

Der Kontaktwinkel ist ein Maß für das Benetzungsverhalten und wird gemäß DIN 53900 gemessen.

Geeignete Materialien mit entsprechendem Benetzungsverhalten sind Polyethylen, Polypropylen, Polyester, Polyamid, Polytetrafluorethylen, Polyvinylchlorid, Epoxidharze und Silikonharze. Ganz besonders bevorzugt ist Polypropylen.

Vorzugsweise wird eine vorneutralisierte Monomerlösung mit dem mindestens einen Vernetzer gemischt, die Mischung inertisiert, die inertisierte Mischung mit mindestens einem Oxidationsmittel vermischt und polymerisiert.

Die wasserabsorbierenden Polymere werden beispielsweise durch Polymerisation einer Monomerlösung, enthaltend
a) mindestens ein ethylenisch ungesättigtes, säuregruppentragendes Monomer,
b) mindestens einen Vernetzer,
c) gegebenenfalls ein oder mehrere mit dem Monomeren a) copolymerisierbare ethylenisch und/oder allylisch ungesättigte Monomere und
d) gegebenenfalls ein oder mehrere wasserlösliche Polymere, auf die die Monomere a), b) und ggf. c) zumindest teilweise aufgepfropft werden können,
erhalten.

Geeignete Monomere a) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure. Ganz besonders bevorzugt ist Acrylsäure.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 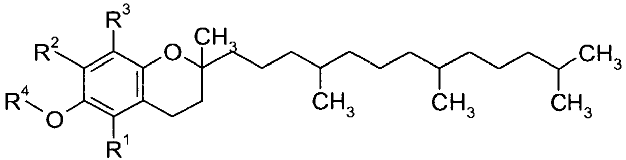 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A-0 530 438 beschrieben, Di- und Triacrylate, wie in EP-A-0 547 847, EP-A-0 559 476, EP-A-0 632 068, WO-A-93/21237, WO-A-03/104299, WO-A-03/104300, WO-A-03/104301 und DE-A-103 31 450 beschrieben, gemischte Acrylate, die neben Acrylatgruppen weitere ethylenisch ungesättigte Gruppen enthalten, wie in DE-A-103 31 456 und WO-A-04/013064 beschrieben, oder Vernetzermischungen, wie beispielsweise in DE-A-195 43 368, DE-A-196 46 484, WO-A-90/15830 und WO-A-02/32962 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 15-fach ethoxylierten Glyzerins, des 3- bis 15-fach ethoxylierten Trimethylolpropans, des 3- bis 15-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine wie sie beispielsweise in WO-A-03/104301 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5- fach ethoxylierten und/oder propoxylierten Glyzerins. Am meisten bevorzugt sind die Triacrylate des 3-bis 5-fach ethoxylierten und/oder propoxylierten Glyzerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Die Menge an Vernetzer b) beträgt vorzugsweise 0,01 bis 1 Gew.-%, besonders bevorzugt 0,05 bis 0,5 Gew.-%, ganz besonders bevorzugt 0,1 bis 0,3 Gew.-%, jeweils bezogen auf das Monomer a).

Mit den Monomeren a) copolymerisierbare ethylenisch ungesättigte Monomere c) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die bevorzugten Polymerisationsinhibitoren benötigen für eine optimale Wirkung gelösten Sauerstoff. Üblicherweise werden die Monomerlösungen vor der Polymerisation weitgehend von Sauerstoff befreit (Inertisierung), beispielsweise mittels Durchströmen mit einem inerten Gas, vorzugsweise Stickstoff. Dadurch werden die Polymerisationsinhibitoren in ihrer Wirkung deutlich abgeschwächt. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Herstellung eines geeigneten Grundpolymers sowie weitere geeignete hydrophile ethylenisch ungesättigte Monomere d) werden in DE-A-199 41 423, EP-A-0 686 650, WO-A-01/45758 und WO-A-03/104300 beschrieben.

Wasserabsorbierende Polymere werden üblicherweise durch Polymerisation einer wässrigen Monomerlösung und gegebenenfalls einer anschließenden Zerkleinerung des Hydrogels erhalten. Geeignete Herstellverfahren sind in der Literatur beschrieben. Wasserabsorbierende Polymere können beispielsweise erhalten werden durch
- Gelpolymerisation im Batchverfahren bzw. Rohrreaktor und anschließender Zerkleinerung im Fleischwolf, Extruder oder Kneter (EP-A-0 445 619, DE-A-19 846 413)
- Polymerisation im Kneter, wobei durch beispielsweise gegenläufige Rührwellen kontinuierlich zerkleinert wird, (WO-A-01/38402)
- Polymerisation auf dem Band und anschließende Zerkleinerung im Fleischwolf, Extruder oder Kneter (DE-A-38 25 366, US-6,241,928)
- Emulsionspolymerisation, wobei bereits Perlpolymerisate relativ enger Gelgrößenverteilung anfallen (EP-A-0 457 660)
- In-situ Polymerisation einer Gewebeschicht, die zumeist im kontinuierlichen Betrieb zuvor mit wässriger Monomerlösung besprüht und anschließend einer Photopolymerisation unterworfen wurde (WO-A-02/94328, WO-A-02/94329)

Die Umsetzung wird vorzugsweise in einem Kneter, wie beispielsweise in WO-A-01/38402 beschrieben, oder auf einem Bandreaktor, wie beispielsweise in EP-A-0 955 086 beschrieben, durchgeführt.

Die Neutralisation kann auch teilweise nach der Polymerisation auf der Stufe des Hydrogels durchgeführt werden. Es ist daher möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden. Die Neutralisation der Monomerlösung auf den Endneutralisationsgrad ist bevorzugt.

Das neutralisierte Hydrogel wird dann mit einem Band- oder Walzentrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß umso einfacher und das Produkt umso weißer, je höher der Feststoffgehalt des Gels ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern. Im Regelfall führt aber auch eine ausreichende Belüftung und Abführung des Wasserdampfes zu einem noch akzeptablen Produkt. Vorteilhaft hinsichtlich Farbe und Produktqualität ist in der Regel eine möglichst kurze Trocknungszeit.

Das getrocknete Hydrogel wird vorzugsweise gemahlen und gesiebt, wobei zur Mahlung üblicherweise Walzenstühle, Stiftmühlen oder Schwingmühlen eingesetzt werden können. Die Partikelgröße des gesiebten, trockenen Hydrogels beträgt vorzugsweise unter 1000 µm, besonders bevorzugt unter 900 µm, ganz besonders bevorzugt unter 800 µm, und vorzugsweise über 100 µm, besonders bevorzugt über 150 µm, ganz besonders bevorzugt über 200 µm.

Ganz besonders bevorzugt ist eine Partikelgröße (Siebschnitt) von 106 bis 850 µm. Die Partikelgröße wird gemäß der von der EDANA (European Disposables and Nonwovens Association) empfohlenen Testmethode Nr. 420.2-02 "Particle size distribution" bestimmt.

Die Grundpolymere werden vorzugsweise anschließend oberflächennachvernetzt. Hierzu geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyglycidylverbindungen, wie in EP-A-0 083 022, EP-A-543 303 und EP-A-937 736 beschrieben, di- oder polyfunktionelle Alkohole, wie in DE-C-33 14 019, DE-C-35 23 617 und EP-A-450 922 beschrieben, oder ß-Hydroxyalkylamide, wie in DE-A-102 04 938 und US-6,239,230 beschrieben.

Des weiteren sind in DE-A-40 20 780 zyklische Karbonate, in DE-A-198 07 502 2-Oxazolidon und dessen Derivate, wie 2-Hydroxyethyl-2-oxazolidon, in DE-A-198 07 992 Bis- und Poly-2-oxazolidinone, in DE-A-198 54 573 2-Oxotetrahydro-1,3-oxazin und dessen Derivate, in DE-A-198 54 574 N-Acyl-2-Oxazolidone, in DE-A-102 04 937 zyklische Harnstoffe, in DE-A- 103 34 584 bizyklische Amidacetale, in EP-A-1 199 327 Oxetane und zyklische Harnstoffe und in WO-A-03/031482 Morpholin-2,3-dion und dessen Derivate als geeignete Oberflächennachvernetzer beschrieben.

Die Nachvernetzung wird üblicherweise so durchgeführt, dass eine Lösung des O-berflächennachvernetzers auf das Hydrogel oder das trockene Grundpolymerpulver aufgesprüht wird. Im Anschluss an das Aufsprühen wird das Polymerpulver thermisch getrocknet, wobei die Vernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige®-Mischer, Bepex®-Mischer, Nauta®-Mischer, Processall®-Mischer und Schugi®-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

Das erfindungsgemäße Verfahren ermöglicht die wirtschaftliche kontinuierliche Herstellung wasserabsorbierender Polymerpartikel. Das Polymerisationsverfahren ist wenig störanfällig. Der Anteil an nicht umgesetzten Monomer und an unvernetzten Polymeren ist besonders niedrig.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymere werden vor der Messung gut durchmischt.

### Restmonomere

Der Gehalt an Restmonomer der wasserabsorbierenden Polymerpartikel wird gemäß der von der EDANA (European Disposables and Nonwovens Association) empfohlenen Testmethode Nr. 410.2-02 "Residual monomers" über HPLC bestimmt.

### Extrahierbare

Der Anteil an Extrahierbaren in den wasserabsorbierenden Polymerpartikeln wird gemäß der von der EDANA (European Disposables and Nonwovens Association) empfohlenen Testmethode Nr. 470.2-02 "Extractables" bestimmt.

Die EDANA-Testmethoden sind beispielsweise erhältlich bei der European Disposables and Nonwovens Association, Avenue Eugene Plasky 157, B-1030 Brüssel, Belgien.

### Beispiele:

### Beispiel 1

Durch kontinuierliches Mischen von Wasser, 50gew.-%iger Natronlauge und Acrylsäure wurde eine 38,8gew.-%ige Acrylsäure/Natriumacrylatlösung mit einem Neutralisationsgrad von 71,3 mol-% hergestellt. Die Monomerlösung wurde beim Mischen der Komponenten durch einen Wärmeaustauscher kontinuierlich auf eine Temperatur von 29°C gekühlt.

Als mehrfach ethylenisch ungesättigter Vernetzer wurde Polyethylenglykoldiacryate (Diacrylat eines Polyethylenglykols mit einem mittleren Molgewicht von 400 g/mol) verwendet. Die Einsatzmenge betrug 2 kg pro t Monomerlösung.

Nach dem Vernetzer wurde Natriumperoxodisulfat in die Monomerlösung dosiert. Die Einsatzmenge pro t Monomerlösung betrug 3,1 kg 15gew.-%iges wässriges Natriumperoxodisulfat.

Der Durchsatz der Monomerlösung betrug 18 t/h.

Die Monomermischung, Wasserstoffperoxid sowie Ascorbinsäure wurden kontinuierlich in einen List Contiknet-Reaktor (Fa. List, Arisdorf, Schweiz) dosiert. Der Druck im Reaktor war gegenüber der Umgebung um 10 mbar erhöht. Die Einsatzmenge an 0,25gew.-%igem Wasserstoffperoxid betrug 1,0 kg pro t Monomerlösung. Die Einsatzmenge an 1 gew.-%iger wässriger Ascorbinsäure betrug 1,1 kg pro t Monomerlösung.

Die Reaktionslösung wurde vor Zulauf mit Stickstoff entgast und hatte am Zulauf eine Temperatur von 23,5°C. Der Reaktor wurde mit einer Drehzahl der Wellen von 38Upm betrieben. Die Verweilzeit der Reaktionsmischung im Reaktor betrug 15 Minuten.

Die Polymerisation verlief störungsfrei.

Nach erfolgter Polymerisation und Gelzerkleinerung wurde das Polymergel auf einen Bandtrockner aufgegeben. Während der Trocknung wurde ein gegenüber dem Umgebungsdruck um 5 mbar verringerter Druck eingestellt. Das vorzerkleinerte Polymergel wurde mit einer Schichtdicke von 10 cm auf den Bandtrockner aufgegeben und mit warmer Luft (175°C) getrocknet. Die Verweilzeit im Bandtrockner betrug 37 Minuten.

Das erhaltene Polymerpulver wurde gemahlen und gesiebt (100 bis 800 µm).

Das Polymerpulver wurde analysiert. Die Ergebnisse sind in Tabelle 1 zusammengefasst.

### Beispiel 2

Es wurde verfahren wie unter Beispiel 1. Natriumperoxodisulfat und Wasserstoffperoxid wurden getrennt vor dem Polymerisationsreaktor in die Monomerlösung dosiert.

Die Polymerisation verlief störungsfrei.

Das Polymerpulver wurde analysiert. Die Ergebnisse sind in Tabelle 1 zusammengefasst.

### Beispiel 3

Es wurde verfahren wie unter Beispiel 1. Natriumperoxodisulfat, Wasserstoffperoxid und Ascorbinsäure wurden getrennt über ein Venturi-Rohr am Reaktoreingang in die Monomerlösung dosiert.

Zur Dosierung des Vernetzers wurde ein 68,4 cm langes Venturi-Rohr eingesetzt (Figur 1), wobei sich die Rohrleitung über eine Strecke von 6,2 cm von einen Durchmesser von 5 cm auf 2,5 cm verjüngte (Strecke L₁), über eine Strecke von 20,3 cm den Durchmesser von 2,5 cm beibehielt (Strecke L₂) und sich über eine Strecke von 41,9 cm wieder von einen Durchmesser von 2,5 cm auf 5 cm weitete (Strecke L₃).

Natriumperoxodisulfat, Wasserstoffperoxid und Ascorbinsäure wurden nacheinander über jeweils zwei gegenüberliegende Zugabepunkte in die Einschnürzone des Venturi-Rohres dosiert.

Gelegentlich polymerisierte die Monomerlösung bereits im Venturi-Rohr.

Das Polymerpulver wurde analysiert. Die Ergebnisse sind in Tabelle 1 zusammengefasst.

### Beispiel 4

Es wurde verfahren wie unter Beispiel 3. Natriumperoxodisulfat und Wasserstoffperoxid wurden vorgemischt.

Gelegentlich polymerisierte die Monomerlösung bereits im Venturi-Rohr.

Das Polymerpulver wurde analysiert. Die Ergebnisse sind in Tabelle 1 zusammengefasst.

### Beispiel 5

Es wurde verfahren wie unter Beispiel 3. Natriumperoxodisulfat und Wasserstoffperoxid wurden vorgemischt. Ascorbinsäure wurde parallel zur Monomerlösung in den Polymerisationsreaktor dosiert.

Die Polymerisation verlief störungsfrei.

Das Polymerpulver wurde analysiert. Die Ergebnisse sind in Tabelle 1 zusammengefasst.

**Tabelle 1· Dosierfolge der Initiatoren**

| Beispiel | NaPS | H₂O₂ | ACS | Extrahierbare | Restmonomer |
|---|---|---|---|---|---|
| 1 | A | B | B | 18,4 Gew.-% | 0,041 Gew.-% |
| 2 | A | A | B | 15,9 Gew.-% | 0,036 Gew.-% |
| 3*) | D | D | D | 11,0 Gew.-% | 0,029 Gew.-% |
| 4*) | C | C | D | 10,5 Gew.-% | 0,025 Gew.-% |
| 5 | C | C | B | 10,6 Gew.-% | 0,026 Gew.-% |

| | | | | | |
|---|---|---|---|---|---|
| NaPS: Natriumperoxodisulfat H₂O₂. Wasserstoffperoxid ACS: Ascorbinsäure *) Polymerisation A: getrennte Dosierung in Monomerlösung B: getrennte Dosierung in Reaktor C: gemeinsame Dosierung in Venturi-Rohr D: getrennte Dosierung in Venturi-Rohr | | | | | |

Die Ergebnisse zeigen, dass Polymere mit wenig Restmonomer und Extrahierbaren erhalten werden, wenn das Oxidationsmittel vor dem Polymerisationsreaktor eingemischt wird und das Reduktionsmittel erst im Polymerisationsreaktor zugesetzt wird. Unabhängig davon wird der Anteil an Restmonomer und Extrahierbaren verringert, wenn ein Venturi-Rohr als Mischeinrichtung verwendet wird.

## Patentansprüche

1. Verfahren zur kontinuierlichen Herstellung wasserabsorbierender Polymerpartikel, wobei eine Monomerlösung mit einem Redox-Initiator, bestehend aus mindestens einem Oxidationsmittel und mindestens einem Reduktionsmittel, vermischt und zu einem Polymergel polymerisiert wird, **dadurch gekennzeichnet, dass** die Monomerlösung vor dem Polymerisationsreaktor mit mindestens einem Oxidationsmittel vermischt wird, mindestens ein Reduktionsmittel in den Polymerisationsreaktor dosiert wird und das Polymergel zerteilt wird.

2. Verfahren gemäß Anspruch 1, **dadurch gekennzeichnet, dass** Monomerlösung und Reduktionsmittel so in den Polymerisationsreaktor dosiert werden, dass sich die Flüssigkeitsströme spätestens in der Höhe vermischen, die dem Füllgrad des Polymerisationsreaktors entspricht.

3. Verfahren gemäß Anspruch 1 oder 2, **dadurch gekennzeichnet, dass** mindestens zwei Oxidationsmittel verwendet werden.

4. Verfahren gemäß Anspruch 3, **dadurch gekennzeichnet, dass** die mindestens zwei Oxidationsmittel vorgemischt werden.

5. Verfahren gemäß einem der Ansprüche 1 bis 4, **dadurch gekennzeichnet, dass** die innere Oberfläche der Verbindung zwischen Oxidationsmittelzuführung und Polymerisationsreaktor zumindest teilweise gegenüber Wasser einen Kontaktwinkel von mindestens 60° aufweist.

6. Verfahren gemäß einem der Ansprüche 1 bis 5, **dadurch gekennzeichnet, dass** die Verweilzeit der Monomerlösung zwischen der stelle der Oxidationsmittelzuführung und dem Polymerisationsreaktor von 0,1 bis 20 Sekunden beträgt.

7. Verfahren gemäß Anspruch 6, **dadurch gekennzeichnet, dass** das mindestens eine Oxidationsmittel über ein Venturi-Rohr in die Monomerlösung dosiert wird.

8. Verfahren gemäß einem der Ansprüche 1 bis 7, **dadurch gekennzeichnet, dass** mindestens 50 mol-% der Monomere der Monomerlösung Acrylsäure und/oder deren Salze sind.

9. Verfahren gemäß einem der Ansprüche 1 bis 8, **dadurch gekennzeichnet, dass** die Monomerlösung im Polymerisationsreaktor zu einem Hydrogel polymerisiert, getrocknet, gemahlen und klassiert wird.

10. Verfahren gemäß Anspruch 9, **dadurch gekennzeichnet, dass** die klassierten Polymerpartikel oberflächennachvernetzt werden.

## Claims

1. A process for continuously preparing water-absorbing polymer particles by mixing a monomer solution with a redox initiator consisting of at least one oxidizing agent and at least one reducing agent and polymerizing it to a polymer gel, which comprises mixing the monomer solution with at least one oxidizing agent upstream of the polymerization reactor, metering at least one reducing agent into the polymerization reactor, and dividing the polymer gel.

2. The process according to claim 1, wherein monomer solution and reducing agent are metered into the polymerization reactor such that the liquid streams mix, at the latest, at the height which corresponds to the fill level of the polymerization reactor.

3. The process according to claim 1 or 2, wherein at least two oxidizing agents are used.

4. The process according to claim 3, wherein the at least two oxidizing agents are premixed.

5. The process according to any of claims 1 to 4, wherein the inner surface of the connection between oxidizing agent feed and polymerization reactor at least partly has a contact angle for water of at least 60°.

6. The process according to any of claims 1 to 5, wherein the residence time of the monomer solution between the point at which the oxidizing agent is fed and the polymerization reactor is from 0.1 to 20 seconds.

7. The process according to claim 6, wherein the at least one oxidizing agent is metered into the monomer solution via a Venturi tube.

8. The process according to any of claims 1 to 7, wherein at least 50 mol% of the monomers of the monomer solution are acrylic acid and/or salts thereof.

9. The process according to any of claims 1 to 8, wherein the monomer solution in the polymerization reactor is polymerized to a hydrogel, dried, ground and classified.

10. The process according to claim 9, wherein the classified polymer particles are surface postcrosslinked.

## Revendications

1. Procédé de fabrication continue de particules polymères absorbant l'eau, selon lequel une solution de monomères est mélangée avec un initiateur redox, constitué par au moins un oxydant et au moins un réducteur, et polymérisée en un gel polymère, **caractérisé en ce que** la solution de monomères est mélangée avec au moins un oxydant avant le réacteur de polymérisation, au moins un réducteur est ajouté dans le réacteur de polymérisation et le gel polymère est fragmenté.

2. Procédé selon la revendication 1, **caractérisé en ce que** la solution de monomères et le réducteur sont introduits dans le réacteur de polymérisation de sorte que les courants de liquide se mélangent au plus tard à la hauteur correspondant au degré de remplissage du réacteur de polymérisation.

3. Procédé selon la revendication 1 ou 2, **caractérisé en ce qu'**au moins deux oxydants sont utilisés.

4. Procédé selon la revendication 3, **caractérisé en ce que** lesdits au moins deux oxydants sont pré-mélangés.

5. Procédé selon l'une quelconque des revendications 1 à 4, **caractérisé en ce que** la surface intérieure du raccord entre la conduite d'alimentation des oxydants et le réacteur de polymérisation présente au moins en partie un angle de contact avec l'eau d'au moins 60°.

6. Procédé selon l'une quelconque des revendications 1 à 5, **caractérisé en ce que** le temps de séjour de la solution de monomères entre l'emplacement de l'introduction des oxydants et le réacteur de polymérisation est de 0,1 à 20 secondes.

7. Procédé selon la revendication 6, **caractérisé en ce que** ledit au moins un oxydant est introduit par un tube Venturi dans la solution de monomères.

8. Procédé selon l'une quelconque des revendications 1 à 7, **caractérisé en ce qu'**au moins 50 % en moles des monomères de la solution de monomères sont de l'acide acrylique et/ou ses sels.

9. Procédé selon l'une quelconque des revendications 1 à 8, **caractérisé en ce que** la solution de monomères est polymérisée en un hydrogel dans le réacteur de polymérisation, séchée, broyée et classifiée.

10. Procédé selon la revendication 9, **caractérisé en ce que** les particules polymères classifiées sont post-réticulées en surface.
